## Europäisches Patentamt
## European Patent Office
## Office européen des brevets

(11) Veröffentlichungsnummer: **0 011 720**
**A1**

# EUROPÄISCHE PATENTANMELDUNG

(21) Anmeldenummer: **79104203.9**

(22) Anmeldetag: **29.10.79**

(51) Int. Cl.³: **H 04 Q 3/24**
**H 04 B 3/28**

(30) Priorität: **24.11.78 DE 2850929**

(43) Veröffentlichungstag der Anmeldung:
**11.06.80 Patentblatt 80/12**

(84) Benannte Vertragsstaaten:
**AT CH DE FR GB IT NL SE**

(71) Anmelder: **SIEMENS AKTIENGESELLSCHAFT Berlin und München**
**Postfach 22 02 61**
**D-8000 München 22(DE)**

(72) Erfinder: **Dalhof, Axel**
**Ahornstrasse 7**
**D-8031 Puchheim(DE)**

(72) Erfinder: **Lechner, Robert, Dipl.-Ing.**
**Haidfeldstrasse 5**
**D-8256 Otterfing(DE)**

(54) **Schaltungsanordnung zur Unterdrückung von Störspannungseinflüssen bei der Bewertung des Signalzustandes auf Übertragungsleitungen, insbesondere auf Teilnehmeranschlussleitungen in Fernsprechanlagen.**

(57) Die Erfindung betrifft eine Schaltungsanordnung zur Unterdrückung der einem auszuwertenden Gleichspannungssignal durch unerwünschte Beeinflussung überlagerten periodischen oder nichtperiodischen Störspannungsanteilen auf gleichstromgespeisten zweiadrigen Übertragungsleitungen, insbesondere für die in der Teilnehmerschaltung der Vermittlungsstelle über symmetrische Zweige (R1, R2) gespeisten und hinsichtlich der Schleifenzustandsänderungen bewerteten Teilnehmeranschlußleitungen in Fernsprechanlagen.

Durch die Ankopplung an geeignete Schaltungspunkte (MP, T1, Minuspol Batterie) der Teilnehmerschaltung wird mit Hilfe eines Differenzverstärkers (OP1 das überlagerte Störsignal abgetrennt und dem Eingang eines weiteren Differenzverstärkers (OP2) zugeführt. An dessen anderem Eingang liegt das ursprüngliche störungsüberlagerte Schleifensignal. An seinem Ausgang entsteht das den Belegungszustand signalisierende störungsfreie Nutzsignal.

./...

SIEMENS AKTIENGESELLSCHAFT      Unser Zeichen
BERLIN UND MÜNCHEN        VPA 78 P 6 2 7 7 EUR

Schaltungsanordnung zur Unterdrückung von Störspannungseinflüssen bei der Bewertung des Signalzustandes auf Übertragungsleitungen, insbesondere auf Teilnehmeranschlußleitungen in Fernsprechanlagen.

------------------------------------------------

Die Erfindung betrifft eine Schaltungsanordnung zur Unterdrückung der einem als Leitungszustandssignal auszuwertenden Gleichspannungssignal durch unerwünschte Beeinflussung überlagerten periodischen oder nichtperiodischen Störspannungsanteile auf gleichstromgespeisten zweiadrigen Übertragungsleitungen, insbesondere für die in der Teilnehmerschaltung der Vermittlungsstelle über symmetrische Zweige gespeisten und hinsichtlich der Schleifenzustandsänderungen bewerteten Teilnehmeranschlußleitungen in Fernsprechanlagen.

Es ist für Überwachungszwecke erforderlich, den Betriebszustand von Übertragungsleitungen festzustellen. Dies trifft insbesondere auf Teilnehmeranschluß-

Rs 1 Stl / 21.11.1978

leitungen zu, die im Ruhezustand einen maximal zulässigen Ableitstrom und in ihrem Arbeitszustand einen Mindestarbeitsstrom führen. Der jeweilige Gleichstromwert läßt sich in dem jedem Teilnehmeranschluß zugeordneten Speisestromkreis feststellen, da in diesem Speisestromkreis bei Änderungen des Belegungszustandes auswertbare Potentialänderungen auftreten.

Den auszuwertenden Nutzsignalen können Störsignale überlagert sein, die beispielsweise durch induktive oder kapazitive Einkopplung entstehen. Diese auftretenden periodischen oder nichtperiodischen Störspannungsanteile können sich derart auf die Auswerteeinrichtung auswirken, daß eine Verfälschung des Auswerteergebnisses eintritt. Es sind zusätzliche Maßnahmen vorzusehen, um eine genügende Sicherheit gegen das fehlerhafte Ansprechen zu erhalten. Bei der Anwendung von Sieb- bzw. Filteranordnungen ergibt sich neben einem verhältnismäßig hohem Raumbedarf der Nachteil, daß sie nur für eine bestimmte Frequenz bzw. für einen bestimmten Frequenzbereich ausgelegt werden können. Weiterhin ist damit eine völlige Eliminierung der überlagerten Störspannungsanteile nicht möglich.

Es ist die Aufgabe der Erfindung, mit einfachen, frequenzunabhängigen Mitteln die überlagerten Störungen zu eliminieren und ein polaritätsrichtiges störungsfreies Gleichspannungsnutzsignal für die weitere Auswertung abzuleiten.

Dies wird bei einer Anordnung der eingangs genannten Art dadurch erreicht, daß zur Abtrennung der Störanteile der eine Eingang eines vorzugsweise aus einem integrierten Operationsverstärker gebildeten Differenzverstärkers an den Verbindungspunkt zweier, einen hochohmigen Querzweig zwischen den Einspeisepunkten bildenden Widerständen und der andere Eingang an den von Leitungszuständen unbeeinflußten einen Pol der speisenden
Quelle angekoppelt ist, daß für die von diesen Ankopplungspunkten abnehmbaren Gleichspannungswerte durch eine jedem Eingang vorgeschaltete feste Teileranrdnung eine
geeignete und wertemäßig gleiche Eingangsgleichspannungsamplitude gebildet wird und daß das ausschließlich den
abgetrennten Störanteil darstellende Ausgangssignal dieses Differenzverstärkers dem einen Eingang eines weiteren
gleichartigen Differenzverstärkers zugeführt wird, dessen anderer Eingang mit einem jeweils unmittelbar das
störspannungsüberlagerte ursprüngliche Gleichspannungssignal führenden Leitungspunkt gekoppelt ist, so daß
an seinem Ausgang das den Leitungssignalzustand kennzeichnende störungsfreie Nutzsignal abnehmbar ist.

Es wird von einem in anderem Zusammenhang bekannten
Prinzip ausgegangen, nämlich eine Abtrennung der Störanteile vorzunehmen und diese mit dem Informationssignal das diese Störanteile noch enthält, zu Kompensationszwecken unmittelbar in Beziehung zu setzen.
Da der Wechselstromwiderstand der speisenden Quelle,
z.B.der Amtsbatterie vernachlässigbar klein ist, ergibt
sich ein Bezugspotential, das frei von den über die Leitung eingekoppelten Störspannungsanteilen ist. Der störspannungsüberlagerte andere Bezugswert wird vom Verbindungspunkt zweier bezüglich der Einspeisepunkte einen
hochohmigen Querzweig bildenden Widerstände abgenommen.
Es können solch große Widerstandswerte für diese Widerstände gewählt werden, daß eine störende Beeinflussung
der Gesamtschaltung nicht eintritt. Bei gleichen Widerstandwerten entsteht an dem genannten Verbindungspunkt
eine Gleichspannung, die wertmäßig der halben Speisespannung entspricht und die gleiche Störüberlagerung aufweist wie die beispielsweise unmittelbar am Speisewiderstand abnehmbare und gleichspannungsmäßig dem
Nutzsignal entsprechende Spannung.

Unabhängig von den Zustandsverhältnissen auf der Leitung werden also für die Abtrennung der Störanteile in
einem Differenzverstärker Anschaltepunkte gewählt, die
ein fest vorgegebenes Gleichspannungsniveau aufweisen.
Dadurch können sie für die Ansteuerung des Differenzverstärkers in einfacher Weise auf einen übereinstimmenden
Gleichspannungswert gebracht werden.

Gemäß einer Weiterbildung der Erfindung erfolgt die
Kopplung des einen Eingangs des genannten weiteren
und das anliegende Nutzsignal in ungestörter Form als
Ausgangssignal liefernden Differenzverstärkers mit
dem das störspannungsüberlagerte ursprüngliche Gleichspannungssignal führenden Leitungspunkt unter Zwischenschaltung eines als Spannungsfolger betriebenen Operationsverstärkers. In der gesamten Auswerteschaltung sind
demnach als aktive Einheiten gleichartige Baueinheiten
verwendet.

Gemäß einer Weiterbildung der Erfindung kann die in
der geschilderten Weise mit den Leitungspunkten gekoppelte Einrichtung für die Beurteilung des Leitungszustandes einer Mehrzahl von Leitungen herangezogen werden. In diesem Fall wird dann die Kopplung ein- und derselben Einrichtung mit den jeweiligen Leitungspunkten
über ein die entsprechende Anzahl von Schritten aufweisendes Auswahlschaltglied vorgenommen. Dadurch ergibt
sich insgesamt bei einem Einsatz in den Teilnehmerschaltungen eine Aufwandsverringerung für die bei der Bewertung der Leitungszustände notwendige und in der Einrichtung vorgenommenen Unterdrückung der eingekoppelten Störanteile.

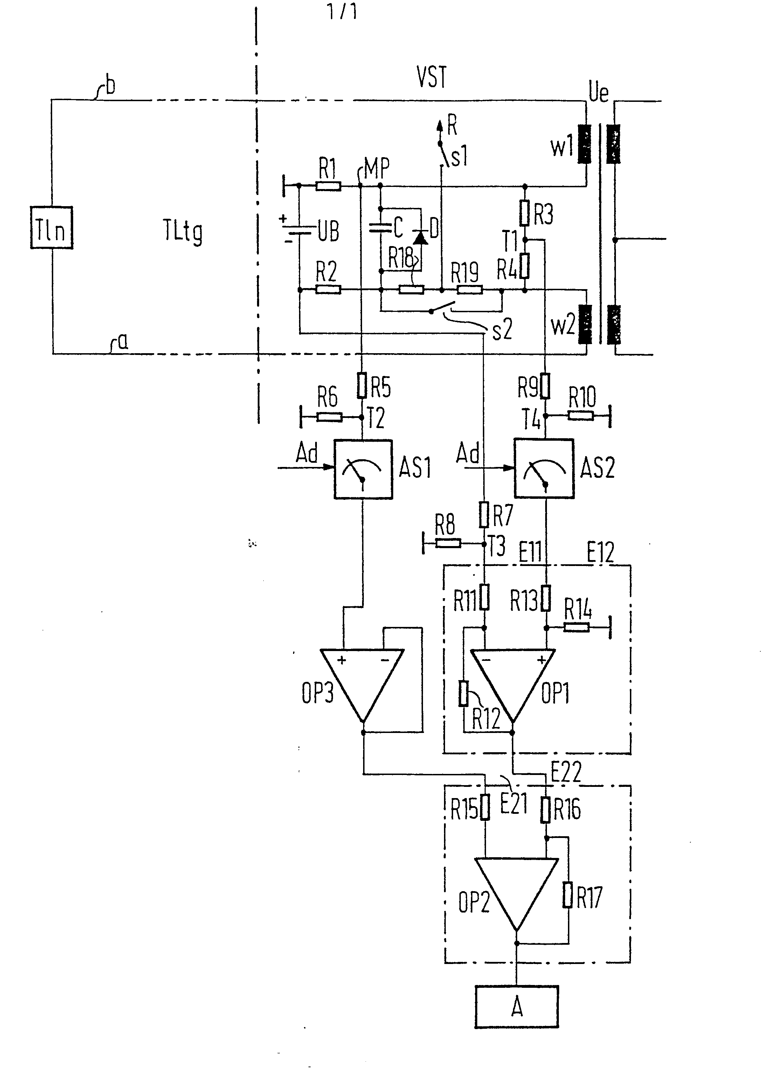

Die Erfindung wird an einem Ausführungsbeispiel näher erläutert. Es sind lediglich die für das Verständnis der Erfindung erforderlichen Bauelemente bzw. Baueinheiten in der Figur dargestellt. Es wird davon ausgegangen, daß eine Teilnehmerstelle Tln über die Teilnehmeranschlußleitung TLtg über eine nicht näher bezeichnete Teilnehmeranschlußschaltung mit den Vermittlungseinrichtungen einer Vermittlungsstelle VST gekoppelt werden kann. Die Teilnehmeranschlußschaltung dient u.a. dazu, die Sprachsignale in beiden Richtungen zu übertragen und eine Abschlußimpedanz für die Leitung zu bilden. Im Ausführungsbeispiel wird dieser Leitungsabschluß durch die beiden Wicklungen W1 und W2 des Leitungsübertragers Ue gebildet. Die nicht mit der jeweiligen Ader a bzw. b verbundenen Enden der beiden Übertragerwicklungen werden durch den Kondensator C kapazitiv geschlossen. Sie bilden gleichzeitig die Einspeisepunkte für die von der Teilnehmeranschlußschaltung aus erfolgenden gleichstrommäßigen Speisung der Teilnehmerstelle. Diese Speisung erfolgt über die beiden Speisewiderstände R1 und R2, die an jeweils einen Pol einer speisenden Quelle, beispielsweise der Amtsbatterie UB angeschlossen sind. Über die Teilnehmeranschlußschaltung wird weiterhin die Rufeinspeisung vorgenommen. Zu diesem Zweck wird durch Schließen des Schalters s1 und gleichzeitigem Öffnen des die Widerstände R18 und R19 im Ruhezustand überbrückenden Schalters s2 an den Verbindungspunkt dieser Widerstände die den Rufstrom liefernde Quelle wirksam angeschaltet. Vermittels des Übertragers Ue wird u.a. das Zweidrahtsystem der Teilnehmeranschlußleitung in eine Vierdrahtdurchschaltung umgesetzt.

In der Teilnehmeranschlußschaltung, die u.a. die angedeuteten Funktionen ausführen kann, soll für Überwachungszwecke der Zustand der Teilnehmeranschlußleitung feststellbar sein. Dies erfolgt durch die Bewertung der Potentialverhältnisse am Meßpunkt MP. Es wird also der Spannungsabfall am Speisewiderstand R1 bewertet. Die beispielsweise bei Schleifenschluß an dem Speisewiderstand R1 sich einstellende Gleichspannung ist von Störanteilen überlagert, die sich durch induktive und kapazitive Einkopplung ausbilden können. Eine derartige Einkopplung von Störanteilen auf die beiden Adern a und b der Teilnehmeranschlußleitung kann zum Beispiel durch eine Starkstromleitung hervorgerufen werden. Es ist nun erforderlich, die Auswirkung der Störanteile auf die den Betriebszustand der Teilnehmeranschlußleitung bewertenden Einrichtung, beispielsweise der Einrichtung A zu unterbinden, so daß eine ausreichende Sicherheit gegen ein fehlerhaftes Ansprechen gegeben ist. Die Störspannungsanteile, die am vorgesehenen Meßpunkt MP der dort sich einstellenden Gleichspannung überlagert sind, treten in gleicher Weise am Verbindungspunkt T1 der beiden hochohmigen Querwiderstände R3 und R4 auf. Sie stimmen demnach mit den Störanteilen am Meßpunkt MP hinsichtlich des Betrages, der Phase und der Frequenz überein. Wird für die Widerstände R3 und R4 der gleiche Widerstandswert gewählt, so entspricht die an diesem Verbindungspunkt T1 entstehende Gleichspannung wertemäßig dem halben Spannungswert der speisenden Quelle, die beispielsweise die Amtsbatterie UB darstellt. Mit dem negativen Pol dieser Batterie steht ein Bezugspunkt zur Verfügung, an dem die Gleichspannung störungsfrei abnehmbar ist, da die Batterie für die eingekoppelten Störanteile praktisch als Kurzschlußkreis anzusehen ist. Es besteht demnach die Möglichkeit, die am Schaltungspunkt T1 bei feststehendem Gleichspannungsanteil auftretenden Störanteile abzutrennen. Dies erfolgt mit dem durch eine entsprechenfe Gegenkopplung als Differenzverstärker geschalteten Operationsverstärker OP1. Zur Bildung des Differenzverstärkers ist der Operationsverstärker OP1 in bekannter Weise mit den Widerständen R11 bis R14 beschaltet. Die über die Eingangswiderstände R11 und R13 gebildeten Eingänge E11 und E12 werden über die Spannungsteiler R7 und R8 bzw. R9 und R10 mit der von dem einen Pol der Batterie abnehmbaren störspannungsfreien bzw. mit der störspannungsüberlagerten Gleichspannung angesteuert. Die Spannungsteiler sind dabei so gewählt, daß die am Teilerpunkt T3 bzw. T4 für die beiden Eingänge des Differenzverstärkers entstehenden Gleichspannungen wertemäßig gleich und für die Ansteuerung des Differenzverstärkers geeignet sind. Unter der Voraussetzung der durch die beiden Teiler verringerten und auf den gleichen Gleichspannungsbetrag gebrachten Eingangssignale entsteht am Ausgang des damit angesteuerten Differenzverstärkers lediglich der Störanteil, der in dem am Schaltungspunkt T1 abgenommenen Signal enthalten ist. Dieser auf diese Weise abgetrennte ausschließliche Störanteil wird dem einen Eingang E22 eines weiteren Differenzverstärkers zugeführt. Dieser Differenzverstärker wird durch die Beschaltung des Operationsverstärkers OP2 mit den Widerständen R15 bis R17 gebildet. Dem anderen Eingang E21 dieses Differenzverstärkers wird über den als Spannungsfolger geschalteten Operationsverstärker OP3 die über den vorgeschalteten und aus den Widerständen R5 und R6 bestehenden Spannungsteiler am Meßpunkt MP abgenommene Spannung zugeführt. Unter Berücksichtigung der jeweiligen Teilerverhältnisse wird also dem einen Eingang E22 ein ausschließlich dem Störanteil proportionales Signal und dem anderen Eingang E21 ein dem aus der Gleichspannung und dem überlagerten Störanteil bestehenden

0011720

Nutzsignal proportionales Signal zugeführt. Es entsteht somit am Ausgang des unter Verwendung des Operationsverstärkers OP2 gebildeten Differenzverstärkers ein störungsfreies Signal, das dem am Meßpunkt MP entstehenden Gleichspannungsnutzsignal proportional ist. Es kann somit durch eine damit angesteuerte Auswerteeinheit A der durch bestimmte Potentialzustände am Meßpunkt definierte Belegungszustand der jeweiligen Teilnehmeranschlußleitung registriert werden.

Wird die Ankopplung an dem jeweiligen Meßpunkt MP über ein entsprechend gesteuertes Auswahlschaltglied AS1 und AS2 vorgenommen, so kann mit einer einzigen und in der geschilderten Weise der Unterdrückung von Störanteilen dienenden Baueinheit eine Vielzahl von Teilnehmeranschlußleitungen auf ihren Belegungszustand abgefragt werden. Es muß dabei für die Auswerteeinrichtung A die richtige Zuordnung zu den einzelnen Teilnehmeranschlußleitungen aufgrund der jeweils vorgegebenen Adresse Ad sichergestellt sein. Als Auswahlschaltglied AS kann beispielsweise ein integrierter Selektor Verwendung finden.

1 Figur
3 Patentansprüche

0011720

- 1 -  VPA
78 P 6 2 7 7 EUR

<u>Patentansprüche</u>

1. Schaltungsanordnung zur Unterdrückung der einem als Leitungszustandssignal auszuwertenden Gleichspannungssignal durch unerwünschte Beeinflussung überlagerten periodischen oder nichtperiodischen Störspannungsanteile auf gleichstromgespeisten zweiadrigen Übertragungsleitungen, insbesondere für die in der Teilnehmerschaltung der Vermittlungsstelle über symmetrische Zweige gespeisten und hinsichtlich der Schleifenzustandsänderungen bewerteten Teilnehmeranschlußleitungen in Fernsprechanlagen, d a d u r c h g e k e n n z e i c h n e t , daß zur Abtrennung der Störanteile der eine Eingang eines vorzugsweise aus einem integrierten Operationsverstärker gebildeten Differenzverstärkers an den Verbindungspunkt zweier, einen hochohmigen Querzweig zwischen den Einspeisepunkten bildenden Widerständen (R3, R4) und der andere Eingang an den vom Leitungszustand unbeeinflußten einen Pol (Minuspol) der speisenden Quelle (UB) angekoppelt ist, daß für die von diesen Ankopplungspunkten (T1, Minuspol) abnehmbare Gleichspannungswerte durch eine jedem Eingang vorgeschaltete feste Teileranordnung (R7, R8 bzw. R9, R10) eine geeignete und wertemäßig gleiche Eingangsgleichspannungsamplitude gebildet wird, und daß das ausschließlich den abgetrennten Störanteil darstellende Ausgangssignal des Differenzverstärkers dem einen Eingang (E22) eines weiteren gleichartigen Differenzverstärkers zugeführt wird, dessen anderer Eingang (E21) mit einem jeweils unmittelbar das störspannungsüberlagerte ursprüngliche Gleichspannungssignal führenden Leitungspunkt gekoppelt ist, so daß an seinem Ausgang ein den Leitungszustand kennzeichnendes und dem störungsfreien Nutzsignal proportionales Signal abnehmbar ist.

2. Schaltungsanordnung nach Anspruch 1, d a d u r c h g e k e n n z e i c h n e t , daß die Kopplung des einen Eingangs des weiteren Differenzverstärkers (OP2, R15 bis R17) mit dem das störspannungsüberlagerte, ursprüngliche Gleichspannungsnutzsignal führenden Leitungspunkt (MP) unter Zwischenschaltung eines als Spannungsfolger betriebenen Operationsverstärkers (OP3) erfolgt.

3. Schaltungsanordnung nach Anspruch 1 und 2, d a - d u r c h g e k e n n z e i c h n e t , daß für eine Mehrzahl von Teilnehmeranschlußleitungen jeweils die genannten und das störspannungsüberlagerte Signal führenden Ankopplungspunkte (MP, T1) über ein die entsprechende Anzahl von Schritten aufweisendes Auswahlschaltglied jeweils mit ein- und derselben, die integrierten Verstärker und die Teilerschaltungen beinhaltenden Anordnung (OP1 bis OP3, R5 bis R17) verbindbar sind.

| EINSCHLÄGIGE DOKUMENTE | | | KLASSIFIKATION DER ANMELDUNG (Int.Cl.²) 3 |
|---|---|---|---|
| Kategorie | Kennzeichnung des Dokuments mit Angabe, soweit erforderlich, der maßgeblichen Teile | betrifft Anspruch | H 04 Q 3/24 <br> H 04 B 3/28 |
| | DE - B - 1 937 359 (LICENTIA) <br> ÷ Gesamt + <br> -- | 1 | |
| | DE - A - 1 762 947 (SIEMENS) <br> ÷ Seite 1, Zeile 1 bis Seite 3, Zeile 24; Seite 5, Zeile 4 bis Seite 8, Zeile 5; Fig.1 + <br> -- | 1 | |
| | DE - A - 1 962 721 (TELEFONBAU UND NORMALZEIT) <br> + Seite 1, Zeile 1 bis Seite 4, Zeile 10; Zeichnung + <br> -- | 1 | **RECHERCHIERTE SACHGEBIETE (Int.Cl.) 3** |
| | US - A - 3 622 709 (TJADEN) <br> + Spalte 1, Zeilen 4 bis 48; Spalte 3, Zeile 3 bis Spalte 4, Zeile 60; Figur 1 + <br> -- | 1 | H 04 Q 3/00 <br> H 04 Q 1/00 <br> H 04 B 3/00 <br> H 04 M 3/00 |
| | DE - B2 - 2 251 879 (INTERNATIONAL STANDARD) <br> + Spalte 1, Zeile 38 bis Spalte 2, Zeile 16; Spalte 2, Zeilen 39 bis 67; Zeichnung + <br> -- | 1,3 | |
| | DE - A1 - 2 555 432 (BAUM) <br> + Seite 2, Zeile 1 bis Seite 4, Zeile 20; Zeichnung + <br> ---- | 1 | **KATEGORIE DER GENANNTEN DOKUMENTE** <br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| WIEN | 08-02-1980 | HAJOS |

EPA form 1503.1 06.78